# DEMANDE DE BREVET EUROPEEN

(11) **EP 0 702 374 A1**
(43) Date de publication de la demande: **20.03.1996**
(21) Numéro de dépôt: 95420258.6
(22) Date de dépôt: 15.09.1995
(51) Int. Cl.: G21F 5/10, G21C 15/12

(54) **Dispositif pour le refroidissement d'enceintes de confinement, notamment de silos de stockage de combustibles nucléaires irradiés**

(30) Priorité: 16.09.1994 FR 9411407
(71) Demandeur: ROBATEL, F-69740 Genas (FR)
(72) Inventeur: Bochard, Camille, FR-69002 Lyon (FR)
(74) Mandataire: Monnier, Guy

(57) **Abrégé**

Le dispositif comprend au moins deux rangées de tubes verticaux (4) que des colliers (5) maintiennent appliqués contre la paroi (1) à refroidir, l'espace libre ou logement (3) qui renferme lesdits tubes étant rempli d'une masse (6) d'un matériau assurant un bon transfert thermique. L'air ambiant peut par convection naturelle traverser les tubes (5) pour dissiper la chaleur dans l'atmosphère.

## Description

On sait que dans certains secteurs industriels, il est nécessaire d'assurer le refroidissement énergique des parois d'enceintes de confinement renfermant des matériaux ou substances propres à engendrer de la chaleur. C'est tout particulièrement le cas des silos destinés au stockage de combustibles nucléaires irradiés.

Dans bon nombre de cas, ce refroidissement est effectué par échange thermique entre la paroi de l'enceinte et le fluide environnant, c'est-à-dire le plus souvent l'air ambiant. On peut alors avoir recours à la simple convection naturelle, mais l'efficacité du refroidissement dépend directement de la surface de contact entre le fluide et la paroi à refroidir, si bien qu'il est fréquemment indispensable d'équiper ladite paroi d'ailettes propres à augmenter sensiblement la surface d'échange. Or, en certains cas, l'utilisation de ces ailettes peut se révéler inappropriée ou de mise en oeuvre difficile et coûteuse.

Dans la demande de Brevet allemand N° 3244707 (VOX), on a décrit un système de refroidissement pour enceintes de confinement qui fait appel à une rangée de tubes verticaux fixés à la paroi extérieure de l'enceinte à l'aide de colliers espacés. Cette rangée de tubes est disposée à l'intérieur d'un logement annulaire défini entre la paroi extérieure de l'enceinte et une enveloppe externe concentrique, afin de se trouver noyée dans une masse obtenue par coulage d'un matériau durcissable apte à assurer un bon transfert thermique par conduction. Les extrémités des tubes s'ouvrent librement dans l'atmosphère de façon à ce que leur refroidissement puisse être opéré par convection thermique naturelle.

La mise en oeuvre d'un tel systéme semble toute fois assez délicate. En effet il est nécessaire de renforcer la masse de ciment ou autre matériau à l'aide d'armatures métalliques verticales. Par ailleurs, pour obtenir une bonne dissipation thermique on doit prévoir des entretoises disposées radialement entre les tubes afin de relier la paroi de l'enceinte à la paroi de l'enveloppe extérieure, ainsi que des cloisons horizontales perforées qui sont traversées par les tubes et par les armatures précitées.

On conçoit sans peine que ces armatures, entretoises et cloisons compliquent et renchérissent la construction de l'ensemble.

C'est à cet inconvénient que la présente invention entend remédier, et ce à l'aide d'un dispositif de refroidissement dont les essais ont prouvé l'efficacité en dépit de la simplicité de sa réalisation.

Le dispositif de refroidissement suivant l'invention est défini à la revendication 1 et aux revendications qui lui sont rattachées.

En fait l'invention comiste à prévoir dans le logement annulaire aux moins deux rangées concentriques de tubes verticaux qui tout en assurant une bonne dissipation thermique, opèrent simultanément le renfort de la masse coulée. On se dispense ainsi de toute armature, entretoise ou cloison intérieure.

De manière particulièrement avantageuse, la fixation en place de ces rangées de tubes est obtenue à l'aide de colliers à profil incomplétement fermé dont l'une des extrémités est soudée à la paroi extérieure de l'enceinte pour la rangée de tubes la plus la plus intérieure, aux colliers de la rangée immédiatement adjacente pour les autres rangées, tandis que l'extrémité opposées est soudée au collier immédiatement adjacent. Le profil incomplétement fermé facilite la pose des différentes rangées en même temps qu'il définit entre les tubes des espaces libres pour le passage de la masse de matériau coulée en place.

On notera qu'en vue d'obtenir un meilleur raidissement de cette masse, les tubes des rangées successives sont préfixablement disposés de manière jointive en venant se loger dans les interstices ménagés entre les tubes de la rangée immédiatement intérieure.

Le dessin annexé, donné à titre d'exemple, permettra de mieux comprendre l'invention, les caractéristiques qu'elle présente et les avantages qu'elle est susceptible de procurer :

Fig. 1 est une coupe horizontale d'un dispositif de refroidissement suivant l'invention, représenté appliqué contre la paroi à refroidir avant coulage de la masse de transfert thermique.

Fig. 2 reproduit fig. 1 après coulage et durcissement de cette masse.

Fig. 3 est une coupe verticale schématique illustrant l'application du dispositif suivant l'invention à un silo de stockage pour combustible nucléaire irradié.

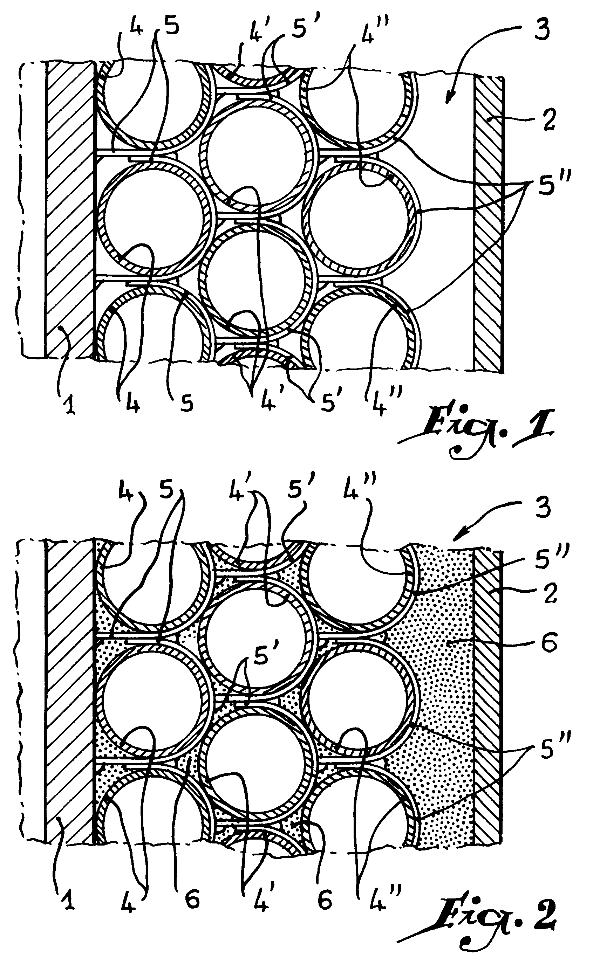

En fig. 1, la référence 1 désigne la paroi métallique de l'enceinte à refroidir, ladite paroi 1 ayant été supposée constituée par une simple tôle de forte épaisseur. A l'extérieur de cette paroi 1 est disposée une enveloppe 2 qui définit ainsi un espace libre ou logement 3, à profil annulaire lorsque la paroi 1 et l'enveloppe 2 sont établies à une section circulaire.

A l'intérieur de ce logement 3 sont prévues trois rangées concentriques de tubes 4, 4', 4'' en un métal bon conducteur de la chaleur (cuivre ou aluminium), qui dans chaque rangée sont disposés parallèlement les uns aux autres suivant l'axe vertical de l'enceinte. On notera que les trois rangées de tubes sont disposées de manière jointive, les tubes d'une rangée venant se loger dans les interstices ménagés par les tubes de la rangée précedente. Les tubes 4 sont fixés à la paroi 1 de place en place, à l'aide de colliers 5 incomplètement fermés de manière à ce que l'une des extrémités de chacun d'eux soit soudée à la paroi 1 tandis que l'autre est fixée, également par soudure, au collier immédiatement adjacent. Les tubes 4' et 4'' sont disposés contre les colliers des tubes des rangées précédentes et fixés à ceux-ci à l'aide de colliers 5', 5'' identiques aux colliers 5 et soudés aux colliers qui maintiennent les tubes de la rangée qui précède.

Bien évidemment, les rangées successives de tubes 4, 4', 4'' sont fixées par soudage avant que l'enveloppe 2 ait été mise en place pour définir le logement 3. On observera que ce dernier est prévu ouvert à son extrémité supérieure et au contraire fermé à son extrémité inférieure.

C'est dans le logement 3 ainsi défini qu'est alors coulé un matériau durcissable propre à assurer un bon transfert thermique par conduction, tel que le plâtre ou le ciment. Avant durcissement, ce matériau doit présenter une coulabilité suffisante pour remplir complètement le logement 3, en pénétrant entre les rangées de tubes 4, 4', 4'' à travers les espaces ménagés par les colliers 5, 5', 5''. On obtient ainsi la masse qui a été représentée en 6 en fig. 2.

On conçoit que les orifices haut et bas des tubes 4, 4', 4'' ayant été laissés libres, l'air ambiant peut, par convection naturelle, traverser lesdits tubes pour assurer la dissipation dans l'atmosphère de la chaleur dégagée par la paroi 1 et transmise par conduction aux tubes précités.

Sous un encombrement remarquablement réduit, on obtient une surface d'échange très importante qui améliore l'efficacité du système de refroidissement. A la différence des ailettes classiques, la fixation des rangées de tubes implique peu de soudage et évite donc la déformation de la paroi à refroidir. La mise en oeuvre est très simple et l'on notera au surplus que les tubes des rangées concentriques constituent par eux-mêmes, des renforts qui dispensent de toute armature.

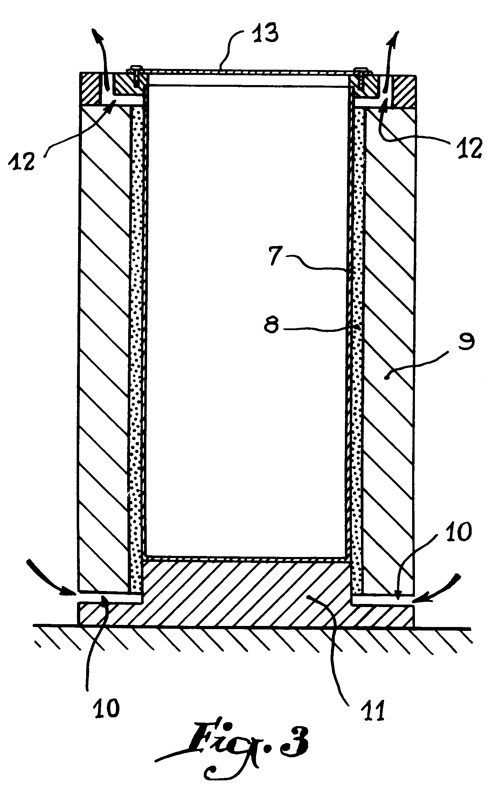

Fig. 3 illustre l'application de l'invention au refroidissement d'un silo vertical pour le stockage de combustibles nucléaires irradiés, lesquels constituent des matières radioactives susceptibles de dégager une puissance résiduelle se traduisant par une élévation importante de la chaleur. C'est contre la paroi extérieure de la cuve cylindrique 7 d'un tel silo qu'est appliqué l'ensemble 8 formé par les tubes disposés en plusieurs rangées concentriques (le nombre de celles-ci dépendant en fait de la quantité de chaleur à dissiper), et par la masse isolante à l'intérieur de laquelle ils sont noyés. L'enveloppe extérieure qui définit le logement annulaire référencé 3 en fig. 1 et 2 est ici directement constituée par la paroi interne de la couronne usuelle 9 en plomb, en béton ou autre matériau qui assure la protection biologique antiradiation.

L'air ambiant pénètre à l'intérieur des tubes de l'ensemble 8 à travers une ouie inférieure annulaire 10 ménagée entre la base de la couronne 10 et le fond 11 du silo. Par convection naturelle, il circule à travers les tubes en évacuant la chaleur dégagée par la cuve 7 et s'échappe dans l'atmosphère à travers une ouie supérieure 12 prévue au-dessous du couvercle usuel 13.

Il va de soi que cette circulation d'air par convection naturelle peut être améliorée à l'aide d'une soufflerie appropriée.

## Revendications

1. Dispositif pour le refroidissement d'enceintes de confinement, notamment de silos de stockage de combustibles nucléaires irradiés, du genre comprenant des tubes paralèles (4) qui fixés à la paroi extérieure (1, 7) de l'enceinte à l'aide de colliers espacés (5), sont disposés à l'intérieur d'un logement annulaire (3) défini entre la paroi précitée et une enveloppe externe concentrique (2,9), afin de se trouver noyés dans une masse (6) obtenue par coulage d'un matériau durcissable apte à assurer un bon transfert thermique par conduction, caractérisé en ce que les tubes sont disposés pour former au moins deux rangées concentriques (4, 4', 4'').

2. Dispositif suivant la revendication 1, caractérisé en ce que la fixation en place des rangées de tubes est assurée à l'aide de colliers (5, 5', 5'') qui présentent un profil incomplétement fermé et dont une extrémité est soudée à la paroi extérieure (1, 7) pour la rangée la plus intérieure, aux colliers de la rangée immédiatement adjacente pour les rangées successives, tandis que l'extrémité opposée est soudée au collier immédiatement adjacent.

3. Dispositif suivant la revendication 1, caractérisé en ce que les tubes des rangées successives sont disposés de manière jointive en venant se loger dans les interstices ménagés entre les tubes de la rangée immédiatement intérieure.
